# EUROPEAN PATENT SPECIFICATION

(11) **EP 1 640 974 B1**
(45) Date of publication and mention of the grant of the patent: **10.06.2009**
(21) Application number: 05019709.4
(22) Date of filing: 09.09.2005
(51) Int. Cl.: G11B 5/41

(54) **Cleaning medium**
Säuberungsmedium
Support de nettoyage

(30) Priority: 28.09.2004 JP 2004282187
(43) Date of publication of application: 29.03.2006
(73) Proprietor: FUJIFILM Corporation, Minato-ku Tokyo (JP)
(72) Inventor: Ishiguro, Tadashi, Fuji Photo Film Co ., Ltd, Odawara-shi Kanagawa (JP)
(74) Representative: HOFFMANN EITLE

(56) References cited:
- EP-A- 1 441 331
- JP-A- 62 092 205
- US-A- 4 701 364
- US-A1- 2002 106 497

## Description

### FIELD OF THE INVENTION

The present invention relates to a cleaning medium which is utilized for cleaning a magnetic head or a running system to be used in magnetic recording/regenerating devices for audio, video or computer, such as a cleaning tape.

### BACKGROUND OF THE INVENTION

In general, recording/reproducing of a magnetic recording device for video, audio or computer is carried out by sliding a magnetic head and a magnetic medium such as a magnetic tape while bringing them into contact with each other. At that time, when chips of the magnetic tape or dusts in the surroundings of the device adhere to the surface of the magnetic head, a reproducing output is lowered, and ultimately, the output is no longer obtained. In order to recover the thus lowered reproducing output, a cleaning medium for cleaning stains which adhere to the surface of the magnetic head and restoring the reproducing output, such as a cleaning tape, is used.

On the other hand, densification of the magnetic recording is progressing every year, and it has become frequently impossible to achieve sufficient recording/reproducing unless the behavior of the contact between a tip of the magnetic head and the magnetic tape is made good. In order to keep the head contact satisfactorily, the cleaning tape is required to get the strains of the magnetic head and also to arrange the shape of the head to some extent. In particular, in recent years, a magnetic head of a magnetic recording/reproducing device for achieving high-density recording such that the shortest recording wavelength is not more than 1 µm is used. The gap length in this magnetic head is not more than 0.4 µm, and even slight strains of the head hinder the recording/reproducing performance.

Furthermore, following the densification, an MR head has been employed as the magnetic head. A shield type MR head element to be generally used has a height of not more than several microns so that it is required that its consumption be made low as far as possible in comparison with conventional ferrite heads and metal heads made of sendust, etc.

Moreover, in recent years, a magnetic recording device in which both a metal evaporated tape (ME tape) and a metal powder tape (MP tape) can be used, such as Hi-8 and DVC, has appeared. In the metal evaporated tape, since a metallic thin film having high rigidity comes into contact with a magnetic head, a good contact state, namely a recording/reproducing characteristic is hardly obtained unless a tip of this magnetic head is sharp. In addition, since the metal evaporated tape does not contain an abrasive, the consumption of the magnetic head at the time of contact is low, and conformability with the magnetic head is low. On the other hand, in the metal tape, a magnetic powder is contained in a binder in its magnetic layer. Accordingly, the metal head comes into soft contact with the magnetic head, and the head contact with the tape does not change so much depending upon the shape of a tip of the head. Also, since the metal tape has wear resistance, its conformability with the magnetic head is good.

Therefore, even if the metal tape is made to run against the magnetic head after running the metal evaporated tape, the head contact does not change so much. Conversely, if the metal evaporated tape is made to run after running the metal tape, there is some possibility that the head contact is in a bad condition.

With respect to the related-art technologies of abrasive tapes which are used for abrasion of the magnetic head, for example, JP-A-62-92205 discloses an abrasive tape composed of a non-magnetic support having laminated thereon an interlayer containing a non-magnetic powder and an abrasive layer containing a non-magnetic abrasive in this order. According to this abrasive tape, by employing a two-layered construction to make the surface properties of the interlayer rough while making the particle size of the abrasive in the upper abrasive layer fine, the generation of head scratch is prevented while maintaining an abrasive force. However, this abrasive tape is used for finish abrasion of magnetic head and has a surface roughness of from 0.03 to 0.3 µm. Judging from these matters, in this abrasive tape, head wear is frequently observed so that it is difficult to perform appropriate abrasion for the purpose of cleaning. Thus, this abrasive tape is improper for application as a cleaning tape. An abrasive tape for magnetic head which is the same as that described above is also disclosed in JP-A-62-94270. This abrasive tape has a two-layered abrasive layer, too. However, in this abrasive tape, it is difficult to perform cleaning satisfactorily without injuring the magnetic head by appropriate abrasion. Thus, this abrasive tape is improper for application as a cleaning medium.

Then, the MR head involves such a problem that it is required that its consumption be made low as far as possible in comparison with conventional ferrite heads and metal heads made of sendust, etc. There has been thus desired effective means for overcoming this problem.

US 2002/0106497 reflecting the preamble of claim 1, discloses a cleaning medium for a magnetic recording apparatus, comprising a nonmagnetic support having provided thereon a lower coating layer mainly containing a nonmagnetic inorganic powder and a binder, and a cleaning layer containing at least a ferromagnetic inorganic powder and a binder provided on the lower coating layer, wherein the thickness of the cleaning layer is from 0.05 to 1.0 µm, the thickness of the lower coating layer is from 0.2 to 5.0 µm, the thickness of the support is from 2.0 to 10 µm, and the thickness in total of the cleaning medium (cleaning tape) is from 4.0 to 15 µm.

EP 1 441 331 describes a method for cleaning a magnetic head using a cleaning tape comprising a substrate and a cleaning layer, wherein the cleaning tape has a stiffness of 2 or less in the width direction, and the magnetic head has trenches substantially parallel to the sliding direction of the cleaning tape.

US 4,701,364 is concerned with a tape for cleaning a magnetic head comprising a support and a cleaning layer coated on at least one surface of said support, which is characterized in that said cleaning layer contains a ferromagnetic metal powder as an abrasive, the surface of said cleaning layer is a surface having a center line average height of not less than 0.025 µm as cut-off value of 0.08 mm, and said tape has a stiffness of not more than 2.

### SUMMARY OF THE INVENTION

An object of the invention is to provide a cleaning medium which is little in head wear against a magnetic head of a high-density magnetic recording/reproducing device, etc., especially an MR head, has an appropriate cleaning power, is able to restore a reproducing output, and is free from corrosion of the magnetic head after cleaning.

The invention is as follows.
(1) A cleaning medium comprising a non-magnetic support, a cleaning layer containing a ferromagnetic powder and a binder provided on the support, and a non-magnetic back layer provided on the opposite surface of the support, characterized in that the surface of the cleaning layer has a C/Fe peak ratio of from 10 to 20, a Cl/Fe peak ratio of not more than 0.2, and an N/Fe peak ratio of from 0.03 to 0.1 according to the Auger electron spectroscopy.
(2) The cleaning medium as set forth above in (1), wherein a lower coating layer containing mainly a non-magnetic inorganic powder and a binder is provided between the non-magnetic support and the cleaning layer.
(3) The cleaning medium as set forth above in (1) or (2), wherein the amount of a residual solvent is not more than 8 mg/m².

According to the invention, since the surface of the

cleaning layer is specified with respect to a C/Fe peak ratio, a Cl/Fe peak ratio and an N/Fe peak ratio according to the Auger electron spectroscopy, it is possible to provide a cleaning medium which is little in head wear against a magnetic head of a high-density magnetic recording/reproducing device, etc., especially an MR head, has an appropriate cleaning power, is able to restore a reproducing output, and is free from corrosion of the magnetic head after cleaning.

### DETAILED DESCRIPTION OF THE INVENTION

A basic structure of the cleaning medium of the invention comprises a non-magnetic support, a cleaning layer containing a ferromagnetic powder and a binder provided on the support, and a non-magnetic back layer provided on the opposite surface of the support. Furthermore, as a preferred embodiment, a lower coating layer containing mainly a non-magnetic inorganic powder and a binder is provided between the non-magnetic support and the cleaning layer. An embodiment in which the cleaning medium of the invention is provided with a lower coating layer will be principally described below.

In the invention, the surface of the cleaning layer is specified with respect to a C/Fe peak ratio, a Cl/Fe peak ratio and an N/Fe peak ratio according to the Auger electron spectroscopy.

The invention is characterized in that by combining the foregoing three factors, a coefficient of friction against the head becomes optimum; that head wear can be controlled; and that the magnetic head such as an MR head is free from corrosion.

Each of the foregoing peak ratios is calculated by using PHI's PHI-660 Model as a unit, accumulating the range of kinetic energy of from 130 to 730 eV thrice under the following measurement condition, and determining a peak intensity in the differential form.

### Measurement condition

Primary electron beam accelerating voltage: 3 kV
Sample current: 130 nA
Magnification: 250 times
Tilt angle: 30°

First of all, in the invention, the surface of the cleaning layer must be controlled so as to have a C/Fe ratio, as determined by the Auger electron spectroscopy, of from 10 to 20, preferably from 10 to 18, and more preferably from 10 to 15.

In the invention, with respect to the C/Fe peak ratio, since the amount of a lubricant present on the surface of the cleaning layer is correlated with the existing amount of an Fe-containing powder, by making the C/Fe peak ratio fall within the range of from 10 to 20, the amount of a lubricant present on the surface of the cleaning layer becomes optimum.

When the C/Fe peak ratio is less than 10, a coefficient of friction against the head becomes high, head wear becomes large, and the head is likely scratched. On the other hand, when the C/Fe peak ratio exceeds 20, a cleaning power is lowered, and a head deposit increases.

In the invention, as a measure for controlling the C/Fe peak ratio at from 10 to 20, there is enumerated a measure for adding a lubricant to be contained in the cleaning layer in an appropriate amount within the range of, for example, from 0.1 to 10 % by weight based on 100 parts by weight of the ferromagnetic powder.

Furthermore, besides the foregoing C/Fe peak ratio, the Cl/Fe peak ratio and N/Fe peak ratio must be controlled. By controlling these ratios, it is possible to improve head corrosion and head deposit.

By controlling the Cl/Fe peak ratio at not more than 0.2, preferably from 0 to 0.18, and more preferably from 0 to 0.15, the head corrosion is improved. When the Cl/Fe peak ratio exceeds 0.2, there is caused a factor for generating head corrosion.

In the invention, as a measure for controlling the Cl/Fe peak ratio at not more than 0.2, such can be achieved by adjusting the total amount of a chlorine-containing compound, for example, a polyvinyl chloride resin binder to be used. The amount of addition of a resin component of the binder (the total sum of a resin component and a curing agent) is preferably in the range of from 10 to 20 % by weight based on 100 parts by weight of the ferromagnetic powder, and the ratio of the polyvinyl chloride resin binder is preferably not more than 40 % by weight of the total amount of the resin component.

Moreover, by controlling the N/Fe peak ratio at from 0.03 to 0.1, preferably from 0.03 to 0.08, and more preferably from 0.03 to 0.06, the head deposit is suppressed. When the N/Fe peak ratio is less than 0.03, the strength of a coating film is lowered, and a deposit to the head increases, finally resulting in increases of head scratch and head wear. On the other hand, when the N/Fe peak ratio exceeds 0.1, sticking of the tape is generated at the time of storage, and an excess of the binder is present on the surface of the cleaning layer, resulting in causing a factor for increasing a head deposit.

In the invention, as a measure for controlling the N/Fe peak ratio at from 0.03 to 0.1, such can be achieved by adjusting the amount of an N-containing compound, for example, an N-containing curing agent such as polyisocyanate. The amount of the curing agent is preferably in the range of from 9 to 20 % by weight based on 100 parts by weight of the ferromagnetic powder.

Examples of the lubricant which is used in the invention include fatty acid amides, fatty acids, and fatty acid esters.

As the fatty acid amides, fatty acids and fatty acid esters, for example, the following compounds are enumerated.

Examples of the fatty acid amide include fatty acid amides having from 8 to 22 carbon atoms.

Examples of the fatty acid include monobasic fatty acids having from 10 to 24 carbon atoms and metal salts thereof (for example, Li, Na, K, and Cu).

Examples of the fatty acid ester include esters of the foregoing monobasic fatty acid having from 10 to 24 carbon atoms and an alcohol having from 4 to 22 carbon atoms.

The foregoing fatty acid and the fatty acid and/or alcohol to be used in amides and esters thereof may be saturated or unsaturated and may be linear or branched or may have an alicyclic ring. Furthermore, the fatty acid and/or alcohol may have an alkoxy group or may have an alkylene oxide polymer or a monoalkyl etherification product thereof. The fatty acid ester may be a monohydric ester or a polyhydric ester, and preferably a monohydric, dihydric or trihydric ester; and in the latter case, a hydroxyl group may retain. The fatty acid amide may be a monohydric amide or a polyhydric amide; and in the latter case, a carboxyl group may retain. In at least one of the fatty acid amide, fatty acid and fatty acid ester, a combination of two or more kinds thereof may be used.

Specific examples of the fatty acid and fatty acid ester include lauric acid, myristic acid, palmitic acid, stearic acid, behenic acid, oleic acid, linolic acid, lenoleic acid, elaidic acid, butyl stearate, octyl stearate, amyl stearate, isooctyl stearate, octyl myristate, butoxyethyl stearate, anhydrosorbitan monostearate, anhydrosorbitan distearate, and anhydrosorbitan tristearate. Furthermore, as the fatty acid amide, there are enumerated ones which are derived from the foregoing fatty acids.

In general, so far as the relationship of the amount is concerned, a relationship of (fatty acid amide) ≤ (fatty acid) ≤ (fatty acid ester) is preferable.

Furthermore, for the purpose of adjusting the C/Fe peak ratio, ones having effects other than those as described above, such as a lubricating effect, an antistatic effect, a dispersing effect, and a plasticizing effect, may be used in the same method. Examples thereof include molybdenum disulfide, tungsten disulfide, graphite, boron nitride, graphite fluoride, silicone oils, polar group-containing silicones, fatty acid-modified silicones, fluorine-containing silicones, fluorine-containing alcohols, fluorine-containing esters, polyolefins, polyglycols, alkyl phosphatea and alkali metal salts thereof, alkyl sulfates and alkali metal salts thereof, polyphenyl ether, fluorine-containing alkyl sulfates and alkali metal salts thereof, monohydric, dihydric, trihydric, tetrahydric, pentahydric or hexahydric alcohols having from 12 to 22 carbon atoms (which may contain an unsaturated bond or may be branched), alkoxy alcohols having from 12 to 22 carbon atoms (which may contain an unsaturated bond or may be branched), and aliphatic amines having from 8 to 22 carbon atoms.

Furthermore, there are enumerated nonionic surfactants (for example, alkylene oxide based surfactants, glycerin based surfactants, glycidol based surfactants, and alkylphenol ethylene oxide adducts), cationic surfactants (for example, cyclic amines, ester amides, quaternary ammonium salts, hydantoin derivatives, heterocyclic compounds, phosphonium compounds, and sulfonium compounds), anionic surfactants containing an acid group (for example, a carboxyl group, a sulfonic acid group, a phosphoric acid group, a sulfate group, and a phosphate group), and amphoteric surfactants (for example, amino acids, aminosulfonic acids, and sulfates or phosphates of an amino alcohol). Details of these surfactants are described in Kaimenkasseizai Biran (Surfactant Handbook) (published by Sangyo Tosho Publishing). These lubricants and antistatic agents and the like need not always be 100 % pure and may contain, in addition to the principal component, impurities such as isomers, unreacted materials, by-products, decomposed products, and oxides. The content of these impurities is preferably not more than 30 %, and more preferably not more than 10 %.

In these compounds which are used in the invention, the types and amounts thereof can be chosen and used as necessary in the lower coating layer and/or the cleaning layer. For example, there may be considered to control bleeding out to the surface by using fatty acids having a different melting point from each other in the lower coating layer and/or the cleaning layer; to control bleeding out to the surface by using esters having a different melting point or polarity from each other; to enhance the stability of coating by regulating the amount of the surfactant; and to enhance a lubricating effect by making the amount of addition of the lubricant in the lower coating layer larger. As a matter of course, however, it should not be construed that the invention is limited thereto.

Examples of trade names of lubricants which are used in the invention include NAA-102, NAA-415, NAA-312, NAA-160, NAA-180, NAA-174, NAA-175, NAA-222, NAA-34, NAA-35, NAA-171, NAA-122, NAA-142, NAA-160, NAA-173K, hardened castor oil fatty acids, NAA-42, NAA-44, CATION SA, CATION MA, CATION AB, CATION BB, NYMEEN L-201, NYMEEN L-202, NYMEEN S-202, NONION E-208 , NONION P-208 , NONION S-207 , NONION K-204, NONION NS-202, NONION NS-210, NONION HS-206, NONION L-2, NONION S-2, NONION S-4, NONION O-2 , NONION LP-20R, NONION PP-40R, NONION SP-60R, NONION OP-80R, NONION OP-85R, NONION LT-221, NONION ST-221, NONION OT-221, MONOGLY MB, NONION DS-60, ANON BF, ANON LG, butyl stearate, butyl laurate, and erucic acid (all of which are manufactured by NOF Corporation); oleic acid (manufactured by Kanto Chemical Co., Inc.); FAL-205 and FAL-123 (all of which are manufactured by Takemoto Oil & Fat Company); ENUJELUB LO, ENUJELUB IPM, and SANSOCIZER E4030 (manufactured by New Japan Chemical Co., Ltd.); TA-3, KF-96, KF-96L, KF96H, KF410, KF420, KF965, KF54, KF50, KF56, KF907, KF851, X-22-819, X-22-822, KF905, KF700, KF393, KF-857, KF-860, KF-865, X-22-980, KF-101, KF-102, KF-103, X-22-3710, X-22-3715, KF-910, and KF-3935 (all of which are manufactured by Shin-Etsu Chemical Co., Ltd.) ; ARMIDE P, ARMIDE C, and ARMOSLIP CP (all of which are manufactured by Lion Armour Co. , Ltd.) ; DUOMIN TDO (manufactured by Lion Corporation) ; BA-41G (manufactured by The Nisshin Oil Mills, Ltd.); and PROFAN 2012E, NEWPOL PE61, IONET MS-400, IONET MO-200, IONET DL-200, IONET DS-300, IONET DS-1000, and IONET DO-200 (all of which are manufactured by Sanyo Chemical Industries, Ltd.).

As the ferromagnetic powder which is used in the cleaning layer, ferromagnetic alloy powders containing, as the principal component (75 % ore more), γ-FeOₓ (wherein x is from 1.33 to 1.5), Co-modified γ-FeOₓ (wherein x is from 1.33 to 1.5), α-Fe, Ni, or Co, and known ferromagnetic powders such as barium ferrite and strontium ferrite can be used. Of these, ferromagnetic alloy powders containing α-Fe as the principal component are preferable. In addition to the prescribed atoms, the ferromagnetic powder may contain atoms such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, and Mg. In particular, in the case of a metallic magnetic material, Al, Si, Ca, Y, Ba, La, Nd, Co, Ni, and B are important as atoms to be contained in addition to α-Fe. Above all, Si, Al, and Y are important for a surface treatment or as a sintering preventive. It is preferable that Co is contained in an amount of from 2 to 40 % by weight based of Fe. Si, Al, and Y are contained in an amount of from 0 to 10 % by weight. These magnetic powders may be previously treated with a dispersant, a lubricant, a surfactant, an antistatic agent, etc. as described later prior to dispersing. Specifically, descriptions for this are available in JP-B-49-14090, JP-B-45-18372, JP-B-47-22062, JP-B-47-22513, JP-B-46-28466, JP-B-46-38755, JP-B-47-4286, JP-B-47-12422, JP-B-47-17284, JP-B-47-18509, JP-B-47-18573, JP-B-39-10307, JP-B-48-39639, U.S. Patents Nos. 3,026,215, 3,031,341, 3,100,194, 3,242,005 and 3,389,014.

Among the foregoing ferromagnetic powders, the ferromagnetic alloy fine powder may contain a small amount of a hydroxide or oxide. As the ferromagnetic alloy fine powder, ones obtained by a known production process can be used, and the following methods can be enumerated. That is, examples thereof include a method for reduction with a composite organic acid salt (mainly an oxalate) and a reducible gas such as hydrogen; a method for reducing iron oxide with a reducible gas such as hydrogen to obtain an Fe or Fe-Co particle; a method for thermal decomposition of a metallic carbonyl compound; a method for reduction by adding a reducing agent (for example, sodium boron hydride, a hypophosphite, and hydrazine) in an aqueous solution of a ferromagnetic metal; and a method for evaporating a metal in a low-pressure inert gas to obtain a fine powder. The thus obtained ferromagnetic alloy powder may be subjected to a known gradual oxidation treatment, namely a method for dipping in an organic solvent and then drying, a method for dipping in an organic solvent and then blowing an oxygen-containing gas thereinto to form an oxidized film on the surface, followed by drying, or a method for regulating partial pressures of an oxygen gas and an inert gas without using an organic solvent, to form an oxidized film on the surface.

The specific surface area according to the BET method of the ferromagnetic powder in the cleaning layer of the invention is usually from 45 to 80 m²/g, and preferably from 50 to 70 m²/g. When the specific surface area is less than 45 m²/g or exceeds 80 m²/g, surface properties are hardly obtained, and hence, such is not preferable. The crystallite size of the ferromagnetic powder in the cleaning layer of the invention is usually from 100 to 300 angstroms, preferably from 100 to 250 angstroms, and more preferably from 140 to 200 angstroms.

The saturation magnetization (σs) of the ferromagnetic powder is preferably from 100 to 180 A·m²/kg, more preferably from 110 to 170 A·m²/kg, and further preferably from 125 to 160 A·m²/kg. The coercive force (Hc) of the ferromagnetic powder is preferably from 500 to 3,000 Oe (≅ from 40 to 240 kA/m). The squareness ratio is preferably from 0.6 to 0.98, and the amount of magnetization of the cleaning layer is preferably from 30 to 300 mT·µm. On the other hand, the acicular ratio of the ferromagnetic powder is preferably from 4 to 18, and more preferably from 5 to 12. It is preferred to regulate the water content of the ferromagnetic powder at from 0.01 to 2 %. It is preferred to optimize the water content of the ferromagnetic powder depending upon the type of the binder.

It is preferred to optimize the pH of the ferromagnetic powder by a combination with the binder. The range of the pH of the ferromagnetic powder is usually from 4 to 12, and preferably from 6 to 10. If desired, the ferromagnetic powder may be subjected to a surface treatment with Al, Si, P, or an oxide thereof. Its amount is usually from 0.1 to 10 % based on the ferromagnetic powder, and the surface treatment of the ferromagnetic powder is preferable because the adsorption of a lubricant such as fatty acids becomes not more than 100 mg/m². There is some possibility that the ferromagnetic powder contains soluble inorganic ions such as Na, Ca, Fe, Ni, and Sr. Though it is preferable that the ferromagnetic powder does not contain such soluble inorganic ions, when the amount thereof is not more than 200 ppm, the characteristics are not particularly affected. Furthermore, though it is preferable that the ferromagnetic powder contains a few of pores, the value thereof is usually not more than 20 % by volume, and preferably not more than 5 % by volume.

As the resin component which is used in the cleaning layer and the lower coating layer, conventionally known thermoplastic resins, thermosetting resins and reactive resins or mixtures thereof are used. As the thermoplastic resin, ones having a glass transition temperature of from -100 to 150 °C, a number average molecular weight of from 1,000 to 200,000, and preferably from 10,000 to 100,000, and a degree of polymerization of from about 50 to 1,000 are useful.

Examples thereof include polymers or copolymers containing, as a constituent unit, vinyl chloride, vinyl acetate, vinyl alcohol, maleic acid, acrylic acid, an acrylic ester, vinylidene chloride, acrylonitrile, methacrylic acid, a methacrylic ester, styrene, butadiene, ethylene, vinyl butyral, vinyl acetal, vinyl ether, etc.; polyurethane resins; and a variety of rubber based resins. Furthermore, examples of the thermosetting resin or reactive resin include phenol resins, epoxy resins, polyurethane curable resins, urea resins, melamine resins, alkyd resins, acrylic reactive resins, formaldehyde resins, silicone resins, epoxy-polyamide resins, mixtures of a polyester resin and an isocyanate prepolymer, mixtures of a polyester polyol and a polyisocyanate, and mixtures of a polyurethane and a polyisocyanate. Details of these resins are described in Purasuchikku Handobukku (Plastic Handbook), published by Asakura Publishing Co. Moreover, known electron beam curable resins can be used in the lower coating layer or the cleaning layer.

Details of these examples and production processs are described in JP-A-62-256219. The resins can be used singly or in combination. Of these, a combination of at least one of a vinyl chloride resin, a vinyl chloride-vinyl acetate resin, a vinyl chloride-vinyl acetate-vinyl alcohol resin, and a vinyl chloride-vinyl acetate-maleic anhydride copolymer with a polyurethane resin, or a further combination with a polyisocyanate is preferable.

As the structure of the polyurethane resin, known structures such as polyester polyurethane, polyether polyurethane, polyether polyester polyurethane, polycarbonate polyurethane, polyester polycarbonate polyurethane, polycaprolactone polyurethane, and polyolefin polyurethane can be used. Above all, a structure comprising a polyurethane resin as a reaction product of at least a polyol and an organic diisocyanate as the major starting materials; which contains, as the polyol component, a cyclic structure-containing short chain diol component, a long chain polyether polyol component, and a polar group-containing long chain polyol component having a molecular weight from 500 to 5,000 in the polyurethane resin, is preferable.

With respect to all of the resin components as enumerated herein, in order to obtain more excellent dispersibility and durability, if desired, it is preferred to introduce at least one polar group selected from -COOM, -SO₃M, -OSO₃M, -P=O(OM)₂, -O-P=O(OM)₂ (wherein M represents a hydrogen atom or an alkali metal base), -OH, -NR², -N⁺R³ (wherein R represents a hydrocarbon group), an epoxy group, -SH, -CN, sulfobetaine, phosphobetaine, and carboxybetaine by copolymerization or addition reaction. The amount of such a polar group is from 10⁻¹ to 10⁻⁸ moles/g, and preferably from 10⁻² to 10⁻⁶ moles/g.

Specific examples of these resin components which are used in the invention include VAGH, VYHH, VMCH, VAGF, VAGD, VROH, VYES, VYNC, VMCC, XYHL, XYSG , PKHH, PKHJ, PKHC, and PKFE (all of which are manufactured by Union Carbide Corporation) ; MPR-TA, MPR-TA5, MPR-TAL, MPR-TSN, MPR-TMF, MPR-TS, MPR-TM, and MPR-TAO (all of which are manufactured by Nissin Chemical Industry Co., Ltd.); 1000W, DX80, DX81, DX82, DX83, and 100FD (all of which are manufactured by Denki Kagaku Kogyo K.K.); MR-104, MR-105, MR110, MR100, and 40OX-110A (all of which are manufactured by Zeon Corporation); NIPPOLAN N2301, NIPPOLAN N2302, and NIPPOLAN N2304 (all of which are manufactured by Nippon Polyurethane Industry Co., Ltd.); PANDEX T-5105, PANDEX T-R3080, PANDEX T-5201, BURNOCK D-400, BURNOCK D-210-80, CRISVON 6109, and CRISVON 7209 (all of which are manufactured by Dainippon Ink and Chemicals, Incorporated); VYLON UR8200, VYLON UR8300, and VYLON UR-8600 (all of which are manufactured by Toyobo Co., Ltd.); DAIFERAMINE 4020, DAIFERAMINE 5020, DAIFERAMINE 5100, DAIFERAMINE 5300, DAIFERAMINE 9020, DAIFERAMINE 9022, and DAIFERAMINE 7020 (all of which are manufactured by Dainichiseika Color & Chemicals Mfg. Co., Ltd.); MX 5004 (manufactured by Mitsubishi Chemical Corporation); SANPRENE SP-150, SANPRENE TIM-3003, and SANPRENE TIM-3005 (manufactured by Sanyo Chemical Industries, Ltd.); and SARAN F310 and SARAN F210 (all of which are manufactured by Asahi Kasei Corporation). Of these, MR-104, MR110, MPR-TAO, MPR-TA, VYLON UR-8200, VYLON UR8300, and SANPRENE TIM-3005 are preferable.

The total sum of the resin component and the curing agent (namely the binder) which are used in the cleaning layer of the invention is usually in the range of from 10 to 30 % by weight, and preferably in the range of from 15 to 25 % by weight based on the ferromagnetic powder. The amount of the binder which is used in the lower coating layer is preferably in the range of from 15 to 40 parts by weight, and more preferably from 20 to 30 parts by weight based on 100 parts by weight of the non-magnetic inorganic powder. In the case where a vinyl chloride based resin is used, the vinyl chloride based resin is used in an amount of from 5 to 30 % by weight; in the case where a polyurethane resin is used, the polyurethane resin is used in an amount of from 2 to 20 % by weight; and it is preferred to use a combination with a polyisocyanate in an amount in the range of from 2 to 20 % by weight.

In the invention, in the case of using a polyurethane, it is preferable that its glass transition temperature is from -50 to 150 °C; that its breaking elongation is from 100 to 2,000 %; that its breaking stress is from 0.05 to 10 kg/mm² (≅ from 0.49 to 98 MPa) ; and that its breakdown point is from 0.05 to 10 kg/mm² (≅ from 0.49 to 98 MPa).

The cleaning medium of the invention is preferably comprised of two or more layers. Accordingly, as a matter of course, the amount of the binder, the amounts of the vinyl chloride based resin, the polyurethane resin, the polyisocyanate, or other resins as occupied in the binder, the molecular weights of the respective resins for forming the cleaning layer, the amount of the polar group, or physical characteristics of the resin as described previously can be varied between the lower coating layer and the cleaning layer, and known technologies can be applied.

Examples of the foregoing polyisocyanate include isocyanates (for example, tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate) ; products between such an isocyanate and a polyalcohol; and polyisocyanates formed by condensation of such an isocyanate. Among these isocyanates, examples of marketed trade names include CORONATE L, CORONATE HL, CORONATE 2030, CORONATE 2031, MILLIONATE MR, and MILLIONATE MTL (all of which are manufactured by Nippon Polyurethane Industry Co., Ltd.); TAKENATE D-102, TAKENATE D-110N, TAKENATE D-200, and TAKENATE D-202 (all of which are manufactured by Takeda Pharmaceutical Company Limited); DESMODUR L, DESMODUR IL, DESMODUR N, and DSEMODUR HL (all of which are manufactured by Sumika Bayer Urethane Co., Ltd.); and BURNOCK D502 (manufactured by Dainippon Ink and Chemicals, Incorporated). These can be used singly or in combination of two or more kinds thereof while utilizing a difference in the curing reactivity in both the lower coating layer and the cleaning layer.

Carbon black may be mixed in the cleaning layer of the invention. Examples of the carbon black which can be used include furnace black for rubber, thermal black for rubber, carbon black for coloring, and acetylene black. The carbon black preferably has a specific surface area of from 5 to 500 m²/g , a DBP oil absorption of from 10 to 400 mL/100 g, a particle size of from 5 to 300 nm, a pH of from 2 to 10, a water content of from 0.1 to 10 %, and a tap density of from 0.1 to 1 g/cc. Specific examples of the carbon black which is used in the invention include BLACKPEARLS 2000, BLACKPEARLS 1300, BLACKPEARLS 1000, BLACKPEARLS 900, BLACKPEARLS 800, BLACKPEARLS 700, and VULCAN XC-72 (all of which are manufactured by Cabot Corporation); #80, #60, #55, #50, and #35 (all of which are manufactured by Asahi Carbon Co., Ltd.) ; #2400B, #2300, #5, #900, #950, #970, #1000, #30, #40, and #10B (all of which are manufactured by Mitsubishi Chemical Corporation) ; and CONDUCTEX SC, RAVEN 150, RAVEN 50, RAVEN 40, and RAVEN 15 (all of which are manufactured by Columbia Carbon Co.). The carbon black may be subjected to a surface treatment with a dispersant, etc. or grafting with a resin, or a part of the surface of the carbon black may be subjected to graphitization. Also, the carbon black may be dispersed with a binder in advance prior to the addition to a coating material for cleaning layer. The carbon black can be used singly or in combination.

In the case where the carbon black is used, it is preferred to use the carbon black in an amount of not more than 5 % by weight based on the ferromagnetic powder. The carbon black has functions of preventing static charging of the cleaning layer, reducing a coefficient of friction, imparting light-shielding properties, and enhancing a film strength. Such functions vary depending upon the type of carbon black to be used. Accordingly, with respect to the carbon black which is used in the invention, it is, as a matter of course, possible to change and choose the type, the amount and the combination in the cleaning layer and the lower coating layer according to the intended purpose based on the previously mentioned various characteristics such as particle size, oil absorption, electric conductivity, and pH.

Furthermore, an abrasive as the inorganic powder may be contained in the foregoing cleaning layer. Examples of the abrasive include known materials having a Mohs' hardness of 6 or more such as α-alumina having an α-component proportion of from 90 % or more, β-alumina, silicon carbide, chromium oxide, cerium oxide, α-iron oxide, corundum, artificial diamond, silicon nitride, silicon carbide, titanium carbide, titanium oxide, silicon dioxide, and boron nitride. These materials are used singly or in combination. Furthermore, a composite material of abrasives (one resulting from surface treating an abrasive with other abrasive) may be used. There may be the case where such an abrasive contains compounds or elements other than the principal components, and when the amount of the principal components is 90 % or more, the effects are not changed. Specific examples of the abrasive include AKP-20, AKP-30, AKP-50, HIT-50, HIT-60, HIT-60A, HIT-70A, HIT-80, HIT-80G, and HIT-100 (all of which are manufactured by Sumitomo Chemical Co., Ltd.); G5, G7, and S-1 (all of which are manufactured by Nippon Chemical Industrial Co., Ltd.); and TF-100 and TF-140 (all of which are manufactured by Toda Kogyo Corp.).

Though the particle size of such an abrasive is preferably from 0.01 to 2 µm, it is possible to bring the same effect by combining abrasives having a different particle size, if desired, or by widening the particle size distribution of even a single abrasive. It is preferable that the tap density is from 0.3 to 2 g/cc; that the water content is from 0.1 to 5 %; that the pH is from 2 to 11; and that the specific surface area is from 1 to 30 m²/g. The abrasive which is used in the invention may be in the form of any one of acicula, sphere, or dice. However, one having an edge in a part of the shape thereof is preferable because of its high cleaning properties. The amount of the abrasive to be blended as the inorganic powder in the cleaning layer is from 1 to 45 % by weight based on 100 % by weight of the foregoing ferromagnetic powder. With respect to the abrasive which is used in the invention, it is, as a matter of course, possible to change and choose the type, the amount and the combination in the lower coating layer and the upper cleaning layer according to the intended purpose. The abrasive may be previously dispersed with a binder and then added to the magnetic coating material. In the cleaning medium of the invention, the number of abrasives present on the surface of the cleaning layer and the end surface of the cleaning layer is preferably 5 or more per 100 µm².

Furthermore, all or a part of the additives which are used in the invention may be added in any stage at the time of production of a coating material. Examples thereof include the case of mixing with an inorganic powder before the kneading step, the case of adding in the kneading step by an inorganic powder, a binder, and a solvent, the case of adding in the dispersing step, the case of adding after dispersing, and the case of adding immediately before coating. Furthermore, there may be the case where the object is achieved by coating the cleaning layer and then adding a part or all of the abrasives at the same time or successively depending upon the intended purpose. Moreover, it is possible to coat a lubricant on the surface of the cleaning layer after a calender treatment or after completion of slitting depending upon the intended purpose.

The non-magnetic inorganic powder which is used in the lower coating layer of the invention can be selected among inorganic compounds such as metal oxides, metal carbonates, metal sulfates, metal nitrides, metal carbides, and metal sulfides.

Examples of the inorganic compound include α-alumina having an α-component proportion of 90 % or more, β-alumina, γ-alumina, θ-alumina, silicon carbide, chromium oxide, cerium oxide, α-iron oxide, goethite, corundum, silicon nitride, titanium carbide, titanium oxide, silicon dioxide, tin oxide, magnetic oxide, tungsten oxide, zirconium oxide, boron nitride, zinc oxide, calcium carbonate, calcium sulfate, barium sulfate, and molybdenum disulfide. They are used singly or in combination of two or more kinds thereof. In particular, titanium dioxide, zinc oxide, iron oxide, and barium sulfate are preferable in view of easiness of availability, costs, narrow particle size distribution, and a wide variety of function imparting means; and titanium dioxide and α-iron oxide are more preferable.

Though the particle size of such a non-magnetic inorganic powder is preferably from 0.005 to 2 µm, it is possible to bring the same effect by combining non-magnetic inorganic powders having a different particle size, if desired, or by widening the particle size distribution of even a single non-magnetic inorganic powder. The particle size of the non-magnetic inorganic powder is especially preferably from 0.01 to 0.2 µm. The tap density is from 0.05 to 2 g/mL, and preferably from 0.2 to 1.5 g/mL. The water content of the non-magnetic inorganic powder is from 0.1 to 5 % by weight, preferably from 0.2 to 3 % by weight, and more preferably from 0.3 to 1.5 % by weight. The pH of the non-magnetic inorganic powder is from 2 to 11, and especially preferably from 5 to 10. The specific surface area of the non-magnetic inorganic powder is usually from 1 to 100 m²/g, preferably from 5 to 70 m²/g, and more preferably from 10 to 65 m²/g. The crystallite size of the non-magnetic inorganic powder is preferably from 0.004 to 1 µm, and more preferably from 0.04 to 0.1 µm. The oil absorption using DBP is usually from 5 to 100 mL/100 g, preferably from 10 to 80 mL/100 g, and more preferably from 20 to 60 mL/100 g. The specific gravity is usually from 1 to 12, and preferably from 3 to 6. The form of the non-magnetic powder may be any one of acicular, spherical, polyhedral, or tabular. In the case of a granulate non-magnetic inorganic powder, it is desirable that one having a mean particle size of not more than 0.08 µm is contained in an amount of 50 % by weight or more of the whole of inorganic powders; and in the case of an acicular non-magnetic inorganic powder, it is suitable that one having an average long axis length of from 0.05 to 0.3 µm and an acicular ratio of from 3 to 20 is contained in an amount of 50 % by weight or more of the whole of inorganic powders.

An ignition loss is preferably not more than 20 % by weight, and originally, it is considered that what the non-magnetic inorganic powder is free from an ignition loss is the most preferable. In general, the Mohs' hardness of the foregoing inorganic powder which is used in the invention is preferably from 4 to 10. The roughness factor of the surface of such a powder is preferably from 0.8 to 1.5, and more preferably from 0.9 to 1.2. The SA (stearic acid) adsorption of the inorganic powder is preferably from 1 to 20 µmoles/m², and more preferably from 2 to 15 µmoles/m². The heat of wetting of the non-magnetic inorganic powder in the lower coating layer into water at 25 °C is preferably in the range of from 200 to 600 mJ/m². Furthermore, it is possible to use a solvent whose heat of wetting falls within this range. The amount of a water molecule on the surface at from 100 to 400 °C is suitably from 1 to 10 per 100 angstroms. It is preferable that the pH at an isoelectric point in water is from 3 to 6.

It is preferable that the surface of the non-magnetic inorganic powder is subjected to a surface treatment with Al₂O₃, SiO₂, TiO₂ ZrO₂, SnO₂, Sb₂O₃, ZnO, or Y₂O₃. In particular, Al₂O₃, SiO₂, TiO₂, and ZrO₂ are preferable in view of dispersibility; and Al₂O₃, SiO₂, and ZrO₂ are more preferable. They may be used in combination or can be used singly. Furthermore, depending upon the intended purpose, a surface treated layer resulting from coprecipitation may be used. There may be employed a method in which the surface is first treated with alumina and the surface layer is then treated with silica, or vice versa. Moreover, though the surface treated layer may be made of a porous layer depending upon the intended purpose, it is generally preferable that the surface treated layer is uniform and dense.

Specific examples of the non-magnetic inorganic powder which is used in the lower coating layer of the invention include NONATITE (manufactured by Showa Denko K.K.); HIT-100 and ZA-G1 (all of which are manufactured by Sumitomo Chemical Co. , Ltd.); α-hematites including DPN-250, DPN-250BX, DPN-245, DPN-270BX and DPB-550BX (all of which are manufactured by Toda Kogyo Corp.); titanium oxides including TTO-51B, TTO-55A, TTO-55B, TTO-55C, TTO-55S, TTO-55D and SN-100 and α-hematites including E270, E271 and E300 (all of which are manufactured by Ishihara Sangyo Kaisha, Ltd.); STT-4D, STT-30D, STT-30, and STT-65C (all of which are manufactured by Titan Kogyo Kabushiki Kaisha); MT-100S, MT-100T, MT-150W, MT-500B, MT-600B, MT-100F, and MT-500HD (all of which are manufactured by Tayca Corporation) ; FINEX-25, BF-1, BF-10, BF-20, and ST-M (all of which are manufactured by Sakai Chemical Industry Co. , Ltd.) ; DEFIC-Y and DEFIC-R (all of which are manufactured by Dowa Mining Co., Ltd.); AS2BM and TiO2P25 (all of which are manufactured by Nippon Aerosil Co. , Ltd.) ; 100A and 500A (all of which are manufactured by Ube Industries, Ltd.) ; and Y-LOP (manufactured by Titan Kogyo Kabushiki Kaisha) and calcined products thereof.

Of the foregoing non-magnetic inorganic powders, α-iron oxide and titanium dioxide are especially preferable. As the α-iron oxide (hematite), one as obtained under the following various conditions can be used. First of all, with respect to an α-Fe₂O₃ particle powder, an acicular goethite particle as a precursor particle is obtained by the following method. A first method is a method in which a suspension containing a ferrous hydroxide colloid as obtained by adding an alkaline hydroxide aqueous solution in an equivalent or more amount to a ferrous salt aqueous solution is subjected to oxidation reaction at a pH of 11 or more and at a temperature of not higher than 80 °C while blowing an oxygen-containing gas thereinto to form an acicular goethite particle. A second method is a method in which a suspension containing FeCO₃ as obtained by making a ferrous salt aqueous solution to react with an alkaline carbonate aqueous solution is subjected to oxidation reaction while blowing an oxygen-containing gas thereinto to form a goethite particle having a spindle-like shape. A third method is a method in which a ferrous salt aqueous solution containing a ferrous hydroxide colloid as obtained by adding an alkaline hydroxide aqueous solution or an alkaline carbonate aqueous solution in an amount less than the equivalent to a ferrous salt aqueous solution is subjected to oxidation reaction while blowing an oxygen-containing gas thereinto to form an acicular goethite nucleus particle, an alkaline hydroxide aqueous solution in an equivalent or more amount to Fe²⁺ in the ferrous salt aqueous solution is added to the ferrous salt aqueous solution containing an acicular goethite nucleus particles, and an oxygen-containing gas is then blown thereinto to grow the acicular goethite nucleus particle. A fourth method is a method in which a ferrous salt aqueous solution containing a ferrous hydroxide colloid as obtained by adding a ferrous salt aqueous solution and an alkaline hydroxide aqueous solution or and alkaline carbonate aqueous solution in an amount less than the equivalent is subjected to oxidation reaction while blowing an oxygen-containing gas thereinto to form an acicular goethite nucleus particle, and the acicular goethite nucleus particle is then grown in an acidic to neutral region. Incidentally, even when foreign elements which are usually added for the purpose of enhancing characteristics of a particle powder or other purpose, such as Ni, Zn, P, and Si, are added during the formation reaction of a goethite particle, there is no hindrance.

Then, an acicular α-Fe₂O₃ particle is obtained by dehydrating the acicular goethite particle as a precursor particle at a temperature in the range of from 200 to 500 °C or optionally further annealing by a heat treatment at a temperature in the range of from 350 to 800 °C. Incidentally, even when a sintering preventive such as P, Si, B, Zr, and Sb adheres to the surface of the acicular goethite particle to be dehydrated or annealed, there is no hindrance. Furthermore, the reason why annealing is carried out by a heat treatment at a temperature in the range of from 350 to 800 °C resides in the matter that it is preferable that pores generated on the particle surface of the acicular α-Fe₂O₃ particle which has been obtained by dehydration are clogged by melting the most superficial particle portion of the particle by annealing, thereby forming a smooth surface state.

The α-Fe₂O₃ particle powder which is used in the invention is obtained by dispersing an acicular α-Fe₂O₃ particle as obtained by the foregoing dehydration or annealing in an aqueous solution to form a suspension and adding an A1 compound and adjusting the pH to coat the particle surface of the foregoing α-Fe₂O₃ particle by the foregoing compound to be added, followed by filtration, washing with water, drying, pulverization, and optionally further deaeration, consolidation, etc. Examples of the Al compound which can be used include aluminum salts (for example, aluminum acetate, aluminum sulfate, aluminum chloride, and aluminum nitrate) and alkaline aluminates (for example, sodium aluminate). In that case, the amount of addition of the A1 compound is from 0.01 to 50 % by weight based on the α-Fe₂O₃ particle powder as reduced into Al. When the amount of addition of the Al compound is less than 0.01 % by weight, dispersing in the binder resin is insufficient. On the other hand, when it exceeds 50 % by weight, the A1 compounds suspending on the particle surface mutually act with each other, and therefore, such is not preferable.

It is also possible to coat the non-magnetic inorganic powder in the lower coating layer in the invention by using not only an Si compound but also one or two or more kinds of compounds selected from P, Ti, Mn, Ni, Zn, Zr, Sn, and Sb together with the Al compound. The amount of addition of each of these compounds to be used together with the Al compound is in the range of from 0.01 to 50 % by weight based on the α-Fe₂O₃ particle powder. When the amount of addition of such a compound is less than 0.01 % by weight, an effect for enhancing the dispersibility due to the addition is not substantially revealed. On the other hand, when it exceeds 50 % by weight, the compounds suspending in other portion than the particle surface mutually act with each other, and therefore, such is not preferable.

Furthermore, the production process of titanium dioxide which is used in the lower coating layer is as follows. That is, the production process of titanium oxide principally includes a sulfate process and a chlorine process. According to the sulfate process, a raw ore of ilminite is cooked with sulfuric acid to extract Ti, Fe, etc. as sulfates. Iron sulfate is removed by crystallization and separation, and the residual titanyl sulfate solution is purified by filtration and subjected to thermal hydrolysis to precipitate hydrated titanium hydroxide. After filtration and washing, foreign impurities are washed out, a particle size regulator and the like are added, and the mixture is then baked at from 80 to 1,000 °C to form crude titanium oxide. A rutile type and an anatase type are separated from each other depending upon the type of a nucleating agent to be added at the time of hydrolysis. This crude titanium oxide is pulverized, made uniform in size and subjected to a surface treatment or other means to prepare titanium dioxide. In the chlorine process, natural rutile or synthetic rutile is used as a raw ore. The ore is chlorinated in the high-temperature reduced state, Ti is converted into TiCl₄ and Fe is converted into FeCl₂, and iron oxide which has become a solid by cooling is separated from liquid TiCl₄. The resulting crude TiCl₄ is purified by rectification, a nucleus generating agent is added, and the mixture is then made to instantaneously react with oxygen at a temperature of 1,000 °C or higher to obtain crude titanium oxide. A finishing method for imparting pigmentary properties to the crude titanium oxide as formed in this oxidative decomposition step is the same as in the sulfate process.

The surface treatment is carried out by dry pulverizing the foregoing titanium oxide raw material, adding water and a dispersant, wet pulverizing, and then performing classification of coarse particles by centrifugation. Thereafter, the finely particulate slurry is transferred to a surface treatment vessel, and surface coating with a metal hydroxide is carried out therein. First of all, a prescribed amount of a salt aqueous solution of Al, Si, Ti, Zr, Sb, Sn, Zn, etc. is added, an acid or an alkali for neutralizing it is added, and the surface of the titanium oxide particle is coated by a hydrated hydroxide as formed. A water-soluble salt formed as a by-product is removed by decantation, filtration and washing, the resulting slurry is finally adjusted with respect to the pH and filtered, followed by washing with pure water. The washed cake is dried by a spray dryer or a hand dryer. Finally, the dried material is pulverized by a jet mill to prepare a product. Furthermore, besides the aqueous system, it is also possible to subject the titanium oxide powder to a surface treatment with Al and Si by passing vapors of AlCl₃ and SiCl₄ and then passing a water vapor. With respect to other production processes of pigments, G.D. Parfitt and K.S.W. Sing, Characterization of Powder Surfaces, Academic Press, 1976 can be made hereof by reference.

In the foregoing non-magnetic inorganic powder, carbon black may be used jointly. By mixing such carbon black in the lower coating layer, not only an antistatic effect by reducing the surface electrical, resistance (Rs) can be reduced, an aspect of which is a known effect, and light transmittance can be decreased, but also a desired micro-Vickers hardness can be obtained. Though the micro-Vickers hardness of the lower coating layer is usually from 25 to 60 kg/mm² from 245 to 588 MPa), for the purpose of adjusting the head contact, it is preferably from 30 to 50 kg/mm² (≅ from 294 to 490 MPa) . The micro-Vickers hardness can be measured by using a thin film hardness meter (HMA-400, manufactured by NEC Corporation) with, as an indenter tip, a triangular pyramidal diamond needle having a tip angle of 80° and a tip radius of 0.1 µm.

Examples of the carbon black which can be used include furnace black for rubber, thermal black for rubber, carbon black for coloring, and acetylene black. The carbon black has a specific surface area of from 100 to 500 m²/g, and preferably from 150 to 400 m²/g and a DBP oil absorption of from 20 to 400 mL/100 g, and preferably from 30 to 200 mL/100 g. The primary particle size of the carbon black is from 10 to 80 nm, preferably from 10 to 50 nm, and more preferably from 10 to 40 nm. The carbon black preferably has a pH of from 2 to 10, a water content of from 0.1 to 10 %, and a tap density of from 0.1 to 1 g/mL.

Specific examples of the carbon black which is used in the invention include BLACKPEARLS 2000, BLACKPEARLS 1300, BLACKPEARLS 1000, BLACKPEARLS 900, BLACKPEARLS 800, BLACKPEARLS 880, BLACKPEARLS 700, and VULCAN XC-72 (all of which are manufactured by Cabot Corporation) ; #3050B, #3150B, #3250B, #3750B, #3950B, #950, #650B, #970B, #850B, MA-600, MA-230, #4000, and #4010 (all of which are manufactured by Mitsubishi Chemical Corporation); CONDUCTEX SC, RAVEN 8800, RAVEN 8000, RAVEN 7000, RAVEN 5750, RAVEN 5250, RAVEN 3500, RAVEN 2100, RAVEN 2000, RAVEN 1800, RAVEN 1500, RAVEN 1255, and RAVEN 1250 (all of which are manufactured by Columbia Carbon Co.) ; and Ketjen Black EC (manufactured by Akzo Nobel) . Those processed by subjecting carbon black to a surface treatment with a dispersant, etc. or grafting with a resin, or by graphitizing a part of the surface thereof may be used. Also, prior to adding carbon black to a coating material, the carbon black may be previously dispersed with a binder.

The carbon black can be used in an amount in the range 5 to 49 % by weight based on the foregoing non-magnetic inorganic powder and within the range not exceeding 40 % by weight of the total weight of the non-magnetic layer. The carbon black can be used singly or in combination. The carbon black which can be used in the invention can be referred to, for example, *Kabon Burakku Binran* (Carbon Black Handbook) (edited by The Carbon Black Association of Japan).

Furthermore, it is possible to add an organic powder in the lower coating layer depending upon the intended purpose. Examples of such an organic powder include acrylic styrene based resin powders, benzoguanamine resin powders, melamine based resin powders, and phthalocyanine based pigments. Polyolefin based resin powders, polyester based resin powders, polyamide based resin powders, polyimide based resin powders, and polyfluoroethylene resins can also be used. As production processes thereof, those as described in JP-A-62-18564 and JP-A-60-255827 are employable.

Besides, with respect to the binder, lubricant, dispersant, additives, solvent, dispersion method and others of the lower coating layer, those in the magnetic layer can be applied. In particular, with respect to the addition amounts and kinds of the binder, additives and dispersant, known technologies regarding the magnetic layer can be applied.

The organic solvent which is used in the lower coating layer and the cleaning layer of the invention can be used at an arbitrary ratio. Examples thereof include a ketone (for example, acetone, methyl ethyl ketone, methyl isobutyl ketone, diisobutyl ketone, cyclohexanone, isophorone, and tetrahydrofuran), an alcohol (for example, methanol, ethanol, propanol, butanol, isobutyl alcohol, isopropyl alcohol, and methylcyclohexanol), an ester (for example, methyl acetate, butyl acetate, isobutyl acetate, isopropyl acetate, ethyl lactate, and glycol acetate), a glycol ether (for example, glycol dimethyl ether, glycol monoethyl ether, and dioxane), an aromatic hydrocarbon (for example, benzene, toluene, xylene, cresol, and chlorobenzene), a chlorinated hydrocarbon (for example, methylene chloride, ethylene chloride, carbon tetrachloride, chloroform, ethylene chlorohydrin, and dichlorobenzene), N,N-dimethylformamide, and hexane. These organic solvents need not always be 100 % pure and may contain, in addition to the major components, impurities such as isomers, unreacted materials, by-products, decomposition products, oxides, and moisture. The content of these impurities is preferably not more than 30 % by weight, and more preferably not more than 10 % by weight.

The organic solvent which is used in the invention is preferably the same type for both the cleaning layer and the lower coating layer. However, the amount of addition of the organic solvent may be varied. It is preferable that a solvent having a high surface tension (for example, cyclohexanone and dioxane) is used in the lower coating layer, thereby enhancing the coating stability. Specifically, it is important that an arithmetic mean value of the solvent composition of the cleaning layer is not lower than an arithmetic mean value of the solvent composition of the lower coating layer. In order to enhance the dispersibility, it is preferable that the polarity is strong to some extent; and it is preferable that the solvent composition contains 50 % or more of a solvent having a dielectric constant of from 15 to 20. Also, it is preferable that the solubility parameter is from 8 to 11.

With respect to the thickness construction of the cleaning tape of the invention, it is effective that the non-magnetic support is thin as from 2.0 to 10 µm. The total thickness of the cleaning layer and the lower coating layer is in the range of from 1/100 to 2 times the thickness of the non-magnetic support. In the cleaning medium of the invention, it is preferable that the thickness of the cleaning layer is from 0.05 to 2.5 µm; that the thickness of the lower coating layer is from 0.2 to 5.0 µm; that the thickness of the support is from 2.0 to 10 µm; and that the thickness as a whole of the cleaning medium (cleaning tape) is from 4.0 to 15 µm. Furthermore, an adhesive layer may be provided between the non-magnetic support and the lower coating layer for the purpose of enhancing the adhesion. The thickness of this adhesive layer is from 0.01 to 2 µm, and preferably from 0.02 to 0.5 µm. Known adhesive layers can be used as the adhesive layer.

Furthermore, a non-magnetic back layer is provided on the reserve surface (opposite side) of the non-magnetic support against the side of the cleaning layer. Its thickness is from 0.1 to 2 µm, and preferably from 0.3 to 1.0µm. With respect to a binder and various additives in the back layer, the formulations in the cleaning layer and lower coating layer can be applied. A suitable configuration of the back layer will be hereunder described.

It is preferred to use carbon black in the back layer for the purpose of preventing static charging. As the carbon black to be used in the back layer, ones which are usually used in a magnetic recording tape can be broadly used. Examples thereof include furnace black for rubber, thermal black for rubber, carbon black for coloring, and acetylene black. In order that irregularities of the back layer may not be transferred into the cleaning layer, it is preferable that the particle size of the carbon black is not more than 0.3 µm. The particle size is especially preferably from 0.01 to 0.1 µm. Furthermore, the amount of the carbon black to be used in the back layer is preferable such that its optical transmission density (transmission value of Macbeth's TR-927) is in the range of not more than 2.0.

For the purpose of enhancing the running durability, it is advantageous to use two kinds of carbon blacks having a different mean particle size in the back layer. In that case, a combination of first carbon black having a mean particle size in the range of from 0.01 to 0.04 µm with second carbon black having a mean particle size in the range of from 0.05 to 0.3 µm.

In the back layer in the invention, a metal oxide may be used. It is preferred to use any one of titanium oxide, α-iron oxide, or a mixture thereof as the metal oxide. With respect to titanium oxide and α-iron oxide, ones which are usually used can be used. Furthermore, the shape of the particle is not particularly limited. In the case of a spherical particle, one having a particle size of from 0.01 to 0.1 µm is suitable; and in the case of an acicular particle, one having an acicular ratio of from 2 to 20 and a long axis length of from 0.05 to 0.3 µm is suitable. At least a part of the surface of the metal oxide may be modified with other compound or coated by other compound such as Al₂O₃, SiO₂, and ZrO₂.

For a binder of the back layer, conventionally known thermoplastic resins, thermosetting resins, reactive resins, and the like can be used. The back layer can be formed by preparing a coating material for forming a back layer in which the foregoing particulate component and binder are dispersed in an organic solvent and coating the coating material on the surface of the support opposite to the cleaning layer.

The non-magnetic support which is used in the invention is one having a micro-Vickers hardness of 75 kg/mm² (≅735 MPa) or more, and known films such as biaxially stretched polyethylene terephthalate, polyethylene naphthalate, aromatic or aliphatic polyamides, polyimides, polyamide-imides, and polybenzoxidazole. In particular, high-strength non-magnetic supports using an aramid resin or polyethylene naphthalate are preferable. Such a non-magnetic support may be previously subjected to a corona discharge treatment, a plasma treatment, an easily adhesive treatment, a thermal treatment, a dust removal treatment, etc.

For the purpose of achieving the object of the invention, it is preferred to use one having a central line average surface roughness (Ra) on the surface of the non-magnetic support on which the cleaning layer is coated. Furthermore, it is preferable that such a non-magnetic support not only has a small central line average surface roughness but also is free from coarse protrusions of 1 µm or more. Moreover, the roughness shape of the surface of the support may be adjusted by properly choosing the size and amount of a filler to be added in the non-magnetic support. Examples of the filler include oxides or carbonates of Al, Ca, Si, Ti, etc., and it does not matter whether they are crystalline or amorphous. Besides, organic fine powders such acrylic materials and melamine based materials are enumerated. Furthermore, in order to seek to make compatible with the running durability, it is preferable that the roughness of the surface on which the back layer is coated is rougher that that of the surface on which the cleaning layer is coated. The central line surface roughness of the surface on which the back layer is coated is preferably 1 nm or more, and more preferably 4 nm or more. In the case of making the roughness of the surface on which the cleaning layer is coated different from that of the surface on which the back layer is coated, a support having a dual construction may be used, or a coating layer may be provided.

The non-magnetic support to be used in the invention preferably has an F-5 value in the running direction (MD direction) of the tape of from 10 to 50 kg/mm² (≅ from 98 to 490 MPa) and an F-5 value in the transverse direction (TD direction) of the tape of from 10 to 30 kg/mm² (≅ from 98 to 294 MPa), and it is general that the F-5 value in the machine direction of the tape is higher than the F-5 value in the transverse direction of the tape. However, in particular, when it is required to increase the strength in the transverse direction, there is no limitation therein. Furthermore, the rate of heat shrinkage of the non-magnetic support in the running direction and transverse direction of the tape is preferably not more than 3 % (more preferably not more than 1.5 %) under a condition of 100 °C x 30 minutes and not more than 1 % (more preferably not more than 0.5%) under a condition of 80 °C x 30 minutes, respectively. The breaking strength is preferably from 5 to 100 kg/mm² (≅ from 49 to 980 MPa) in the both directions, and the Young's modulus is preferably from 100 to 3,000 kg/mm² (≅ from 0.98 to 29.4 GPa). Moreover, the light transmittance at 900 nm is preferably not more than 30 %, and more preferably not more than 3 %.

The step for producing a coating material for each of the lower coating layer and the cleaning layer of the cleaning medium of the invention comprises at least a kneading step and a dispersing step and optionally, a mixing step that is provided before or after the preceding steps. Each of the steps may be separated into two or more stages. All of the raw materials which are used in the invention, including the ferromagnetic powder, binder, carbon black, abrasive, antistatic agent, lubricant and solvent, may be added in any step from the beginning or in the way of the step. Also, each of the raw materials may be divided and added across two or more steps. For example, a polyurethane may be divided and charged in the kneading step, the dispersing step, and the mixing step for adjusting the viscosity after dispersing.

In order to achieve the object of the invention, as a matter of course, a conventionally known production technology can be employed as a part of the steps. In the kneading step, it is preferred to use a machine having a strong kneading power, such a continuous kneader and a pressure kneader. In the case where a continuous kneader or a pressure kneader is used, the ferromagnetic powder and the whole or a part of the binder (however, preferably 30 % or more of the whole of the binder) are kneaded in an amount in the range of from 15 to 500 parts by weight based on 100 parts by weight of the ferromagnetic powder. Details of these kneading treatments are described in JP-A-1-166338 and JP-A-64-79274. Also, in the case of preparing a liquid for non-magnetic layer of the lower coating layer, it is desired to use a dispersing medium having a high specific gravity. Above all, zirconia beads are suitable.

As examples of the preferred device and method for coating the cleaning medium having a multilayer construction according to the invention, the following constructions can be proposed.
1. First of all, a lower coating layer is coated by a device for gravure coating, roll coating, blade coating, extrusion coating, etc., which is generally used for coating a magnetic coating material; and a cleaning layer is then coated in the state that the lower coating layer is still wet by a support pressure type extrusion coating device as disclosed in JP-B-1-46186, JP-A-60-238179, and JP-A-2-265672.
2. A lower coating layer and a cleaning layer are coated substantially at the same time from one coating head integrated with two coating liquid-passing slits as disclosed in JP-A-63-88080, JP-A-2-17971, and JP-A-2-265672.
3. A lower coating layer and a cleaning layer are coated substantially at the same time by a backup roll-equipped extrusion coating device as disclosed in JP-A-2-174965.

Incidentally, in order to prevent agglomeration of the magnetic particle, it is desired to impart a shear force in the coating liquid within the coating head by a method as disclosed in JP-A-62-95174 and JP-A-1-236968. In addition, with respect to the viscosity of the coating liquid, the numerical range as disclosed in JP-A-3-8471 must be satisfied.

In order to obtain the cleaning medium of the invention, the ferromagnetic powder of the cleaning layer may be subjected to an orientation treatment. It is preferable that this orientation is carried out by using a solenoid having a magnetic force of 100 mT or more jointly with, as a counter pole, a cobalt magnet having a magnetic force of 200 mT or more. In addition, it is preferred to provide a proper drying step in advance prior to the orientation such that the orientation properties after drying become the highest.

Furthermore, before simultaneous multilayer coating of the non-magnetic lower coating layer and the cleaning layer, it is preferred to provide an adhesive layer containing a polymer as the principal component, or to combine known measures for enhancing adhesion by corona discharge, UV irradiation, and EB irradiation.

In addition, it is preferred to perform a calender treatment for the purpose of adjusting the surface of the cleaning layer. It is possible to use, as a calender treatment roll, a heat resistant plastic roll such as epoxy resins, polyimides, polyamides, and polyimide-amides. The treatment can also be performed between metallic rolls. The treatment temperature is preferably from 50 to 100 °C, and more preferably from 80 to 100 °C; the linear pressure is preferably from 100 to 500 kg/m (≅ from 980 to 4,900 N/m), and more preferably from 200 to 400 kg/m (≅ from 1,960 to 3,920 N/m) ; and the rate is preferably from 50 to 400 m/min, and more preferably from 100 to 300 m/min.

In the cleaning medium of the invention, the coefficient of friction of each of the surface of the cleaning layer and the opposite surface thereto against SUS420J is preferably from 0.1 to 0.5, and more preferably from 0.2 to 0.3. The surface specific resistance is preferably from 10⁴ to 10¹² ohms/sq; the elastic modulus of the cleaning layer at an elongation of 0.5 % is preferably from 100 to 2,000 kg/mm² (≅ from 0.98 to 19.6 GP) ; and the breaking strength is preferably from 1 to 30 kg/mm² (≅ from 9.8 to 294 MPa).

Furthermore, the whole of the cleaning medium has a Young's modulus in the machine (MD) direction of from 300 to 1,200 kg/mm² (≅ from 2.94 to 11.76 GPa), a Young's modulus in the transverse (TD) direction of from 200 to 1,200 kg/mm² (≅ from 1.96 to 11.76 GPa), and a ratio of the Young's modulus in the machine direction to the Young's modulus in the transverse direction of from 1/2 to 2/1.

In addition, the residual elongation of the cleaning medium is preferably not more than 0.5 %; and the rate of heat shrinkage at any temperature of not higher than 100 °C is preferably not more than 1 %, more preferably not more than 0.5 %, most preferably not more than 0.1 %, and ideally 0 %. The glass transition temperature (maximum point of loss elastic modulus in the measurement of dynamic viscoelasticity as measured at 110 Hz) of the cleaning layer is preferably from 50 °C to 120 °C; and that of the lower coating layer is preferably from 0 °C to 100 °C. The loss elastic modulus is preferably in the range of from 1 × 10⁷ to 8 × 10⁸ Pa, and the loss tangent is preferably not more than 0.2. When the loss tangent is too large, failure due to sticking is liable to occur. The amount of the residual solvent to be contained in the cleaning layer is preferably not more than 100 mg/m², and more preferably not more than 10 mg/m². It is preferable that the amount of the residual solvent to be contained in the cleaning layer is less than that of the residual solvent to be contained in the lower coating layer. The porosity is preferably not more than 50 % by volume, and more preferably not more than 40 % by volume in both the lower coating layer and the cleaning layer.

With respect to magnetic characteristics of the cleaning layer of the cleaning medium of the invention, when measured in the magnetic field of 10 kOe {Oe = (1/4π) kA/m} by a vibrating sample magnetometer (VSM), the coercive force (Hc) in the running direction of the tape is from 500 to 3,000 Oe (≅ from 40 to 240 kA/m). The squareness ratio is from 0.6 to 0.98, preferably 0.80 or more, and more preferably 0.85 or more. It is preferable that the squareness ratio in the two directions at right angles to the running direction of the tape is not more than 80 % of the squareness ratio in the running direction. The SFD of the cleaning layer is preferably not more than 0.6, more preferably not more than 0.5, and ideally 0. The Remanence coercive force (Hr) in the machine direction is preferably from 1,800 to 3,000 Oe (≅ from 144 to 240 kA/m). The Hc and Hr in the vertical direction are each preferably from 1,000 to 5,000 Oe (≅ from 80 to 400 kA/m) . In addition, though the central line surface roughness (Ra) of the cleaning layer is preferably from 1.0 to 7.0 nm, its value should be properly set up depending upon the intended purpose. The RMS surface roughness (R_{RMS}) as determined by the evaluation by AFM is preferably in the range of from 2 to 15 nm.

Furthermore, in the cleaning medium of the invention, the amount of the residual solvent is preferably not more than 8 mg/m². When the amount of the residual solvent exceeds 8 mg/m², the strength of the coating film is lowered, and a deposit to the head increases, finally resulting in possible increases of head scratch and head wear.

The amount of the residual solvent as referred to in the invention can be calculated by removing the back layer from the cleaning medium and measuring it in a measuring area of 0.02 m² by using a gas chromatogram in the usual manner.

In the invention, the amount of the residual solvent in the medium was measured by heating the foregoing area to 120 °C using a gas chromatograph GC-14A as manufactured by Shimadzu Corporation.

Though the cleaning medium of the invention preferably has the lower coating layer and the cleaning layer, it is easily presumed that these physical characteristics can be made different in the lower coating layer and the cleaning layer depending upon the intended purpose. For example, it is possible to make the head contact of the cleaning medium good by increasing the elastic modulus of the cleaning layer and simultaneously making the elastic modulus of the lower coating layer lower than that of the cleaning layer. Furthermore, it is also effective in the invention to change the tensilization method of the support to improve the head contact, and there is often found the case where in a support as tensilized in the direction at right angles to the machine direction of the tape, the head contact becomes good.

### EXAMPLES

The invention will be described below in more detail with reference to the following Examples. In the Examples, the term "parts" means "parts by weight".

### (Example 1)

### Preparation of coating liquid for cleaning layer

| | |
|---|---|
| Ferromagnetic metal fine powder: | 100 parts |
| Composition: Fe/Co = 100/30 | |
| Hc: 2,350 Oe (≅ 188 kA/m). | |
| Specific surface area by the BET method (S_{BET}) : Surface treated layer: Al₂O₃, SiO₂, Y₂O₃ | 69 m²/kg |
| Crystallite size (long axis size): | 50 nm |
| Acicular ratio: 7 | |
| σs : 120 A-m²/kg | |
| Vinyl chloride copolymer (MR110, a trade name as manufactured by Zeon Corporation): | 2 parts |
| Polyurethane resin (UR8200 as manufactured by Toyobo Co., Ltd.): | 10 parts |
| Polyisocyanate (CORONATE L as manufactured by Nippon Polyurethane Industry Co., Ltd.): | 13.5 parts |
| α-Al₂O₃ (Mohs' hardness: 9, mean particle size: 0.10 µm): | 5 parts |
| Carbon black (mean particle size: 0.08 µm) : | 0.5 parts |
| Butyl stearate: | 1 part |
| Stearic acid: . | 5 parts |
| Methyl ethyl ketone: | 90 parts |
| Cyclohexanone: | 50 parts |
| Toluene: | 50 parts |

With respect to the foregoing coating material, the respective components were kneaded and then dispersed. 40 parts of a mixed solvent of methyl ethyl ketone and cyclohexanone was added to the resulting dispersion, and the mixture was filtered by using a filter having a mean pore size of 1 µm to prepare a coating liquid for cleaning layer. The resulting coating liquid for cleaning layer was coated in a thickness after drying of 1.8 µm on a non-magnetic support and oriented in the state that the layer was still wet, followed by drying. Thereafter, the coating layer was treated by a 7-stage calender constructed by a metallic roll and an epoxy resin-made roll, and a coating liquid for back layer as described below was then coated in a thickness of 0.3 µm on the surface of the support opposite to the cleaning layer. The product was slit in a width of 1/2 inches to prepare a cleaning tape of the invention.

Incidentally, a polyethylene naphthalate-made support having a thickness of 6 µm was used as the non-magnetic support.

### Preparation of coating liquid for back layer

### Kneaded material 1

| | |
|---|---|
| Carbon black (BP-800 as manufactured by Cabot Corporation): | 100 parts |
| Nitrocellulose RS1/2: | 100 parts |
| Polyurethane resin (N2301 as manufactured by Nippon Polyurethane Industry Co.,.Ltd.): Dispersant: | 30 parts |
| Copper oleate: | 5 parts |
| Copper phthalocyanine: | 5 parts |
| Precipitated barium sulfate: | 5 parts |
| Methyl ethyl ketone: | 500 parts |
| Toluene: | 500 parts |

### Kneaded material 2

| | |
|---|---|
| Carbon black: | 100 parts |
| SSA: 8.5 m²/g, mean particle seize: 270 mµ, DBP oil absorption: 36 mL/100 g, pH: 10 | |
| Nitrocellulose: | 100 parts |
| Polyurethane resin (N2301 as manufactured by Nippon Polyurethane Industry Co., Ltd.): | 30 parts |
| Methyl ethyl ketone: | 300 parts |
| Toluene: | 300 parts |

The foregoing kneaded material 1 was preliminarily kneaded by using a roll mill, and the kneaded materials 1 and 2 were then dispersed by using a sand grinder. After completion, the following materials were added to prepare a coating liquid for back layer.

| | |
|---|---|
| Polyester resin (VYLON 300 as manufactured by Toyobo Co., Ltd.): | 5 parts |
| Polyisocyanate (CORONATE L as manufactured by Nippon Polyurethane Industry Co., Ltd.): | 5 parts |

### (Examples 2 to 3)

The procedures as in Example 1 were followed, except that on a basis of the coating liquid for cleaning layer of Example 1, the amounts of the vinyl chloride copolymer and the polyurethane resin as the resin components of the binder, the amount of the polyisocyanate as the curing agent, the amount of addition of the total sum of butyl stearate and steric acid as the lubricant, and the amount of a residual solvent were changed as shown in Table 1. Incidentally, the adjustment of the amount of a residual solvent was carried out by changing the drying condition.

### (Example 4)

A coating liquid for cleaning layer was prepared in the same manner as in Example 1. Subsequently, the following coating liquid for lower coating layer was prepared.

### Preparation of coating liquid for lower coating layer

| | |
|---|---|
| Non-magnetic inorganic powder, α-Fe₂O₃ | 80 parts |
| (hematite) : | |
| Long axis length: 0.10 µm | |
| S_{BET}: 52 m²/g | |
| pH: 6.0 | |
| Tap density: 0.8 | |
| DBP oil absorption: 27 to 38 g/100 g | |
| Surface treated layer: Al₂O₃, SiO₂ | |
| Carbon black: | 20 parts |
| Average primary particle size: 16 nm | |
| DBP oil absorption: 80 mL/100 g | |
| pH: 8.0 | |
| S_{BET} : 250 m²/g | |
| Volatile matter: 1.5 % | |
| Polyurethane resin (UR8300 as manufactured by Toyobo Co., Ltd.): | 6 parts |
| Vinyl chloride copolymer (MR110, a trade name as manufactured by Zeon Corporation): | 3 parts |
| Polyurethane resin (UR8200 as manufactured by Toyobo Co., Ltd.): | 8 parts |
| Polyisocyanate (CORONATE L as manufactured by Nippon Polyurethane Industry Co., Ltd.): | 3.5 parts |
| Butyl stearate: | 1 part |
| Stearic acid: | 1 part |
| Methyl ethyl ketone: | 100 parts |
| Cyclohexanone: | 50 parts |
| Toluene: | 50 parts |

With respect to the foregoing coating material, the respective components were kneaded by an open kneader and then dispersed by using a sand mill. 40 parts of a mixed solvent of methyl ethyl ketone and cyclohexanone was added to the resulting dispersion for lower layer, and the mixture was filtered by using a filter having a mean pore size of 1 µm to prepare a coating liquid for lower coating layer. On the same non-magnetic support as in Example 1, the resulting coating liquid for lower coating layer was coated in a thickness after drying of 1 µm, and immediately thereafter, the cleaning layer was provided in a thickness of 0.2 µm thereon by simultaneous double layer coating. The coated material was oriented in the state that the both layers were still wet, followed by drying. Thereafter, the resulting material was treated by a 7-stage calender constructed by a metallic roll and an epoxy resin-made roll, and the same back layer as in Example 1 was coated in a thickness of 0.3 µm on the surface of the support opposite to the cleaning layer. The product was slit in a width of 1/2 inches to prepare a cleaning tape of the invention.

### (Comparative Examples 1 to 4)

The procedures as in Example 1 were followed, except that on a basis of the coating liquid for cleaning layer of Example 1, the amounts of the vinyl chloride copolymer and the polyurethane resin as the resin components of the binder, the amount of the polyisocyanate as the curing agent, the total sum of butyl stearate and steric acid as the lubricant, and the amount of a residual solvent were changed as shown in Table 1. Incidentally, the adjustment of the amount of a residual solvent was carried out by changing the drying condition.

With respect to the cleaning tapes as obtained in the foregoing respective Examples and Comparative Examples, C/Fe, Cl/Fe and N/Fe peak ratios on the surface of the cleaning layer were measured according to the Auger electron spectroscopy. Furthermore, the amount of a residual solvent, head wear, head cleaning force, head scratch, head deposit, and head corrosion were examined. The results obtained are shown in Tables 1 and 2.

Here, the measurement methods of the respective measured values will be described below.

### C/Fe, Cl/Fe and N/Fe peak ratios on the surface of the cleaning layer according to the Auger electron spectroscopy

The measurement was carried out by the foregoing method.

### Amount of residual solvent

The measurement was carried out by removing the back layer and measuring the total amount of the solvent in a measuring area of 0.02 m² under the foregoing conditions by using a gas chromatogram.

### Head wear

Using an LTO (Ultrium) drive (using an MR head) as manufactured by IBM, the cleaning tape was run for one hour under a condition of 23 °C x 70 % RH, and a head height before and after the running was measured, from which was then calculated a head wear per 10 minutes.

### Head cleaning force

Using an LTO Ultrium 1 data cartridge (Model: LTO FB UL-1 100G E) as manufactured by Fuji Photo Film Co., Ltd., an output is previously measured by an LTO (Ultrium) drive (using an MR head) as manufactured by IBM. Thereafter, a standard tape as prepared for the purpose of causing clogging is run by that LTO (Ultrium) drive (using an MR head) as manufactured by IBM, the state of the head is observed by a stroboscope, and at a point that a number of stains adhere to the head, the running is stopped, thereby confirming that no output is present at all. Thereafter, each of the cleaning tape samples is run for one minute, and an output is then measured by using the previously recorded LTO Ultrium 1 data cartridge (Model: LTO FB UL-1 100G E) as manufactured by Fuji Photo Film Co., Ltd. A difference dB between the finally measured output and the first measured output was evaluated as a head cleaning force. Furthermore, the presence or absence of head scratch after running of the cleaning tape was observed.

### Head deposit

When the amount of head wear was measured, the presence or absence of a deposit on the head was microscopically observed.

### Head corrosion

The cleaning tape and the MR head were brought into contact with each other, and after allowing to stand for 24 hours, the state of corrosion of the MR head was microscopically confirmed.

**Table 1**

| | Peak ratio | | | Amount of residual solvent (mg/m²) | Amount of addition of resin component (parts) | Amount of addition of curing agent (parts) | Amount of addition of lubricant (parts) |
|---|---|---|---|---|---|---|---|
| | C/Fe | Cl/Fe | N/Fe | | | | |
| Example 1 | 15 | 0.1 | 0.05 | 5 | 12 | 13.5 | 6 |
| Example 2 | 10 | 0.05 | 0.1 | 3 | 10 | 14 | 3 |
| Example 3 | 20 | 0.20 | 0.03 | 8 | | 9 | 8 |
| Example 4 | 15 | 0.15 | 0.05 | 4 | 20 | 17 | 10 |
| Comparative Example 1 | 40 | 0.30 | 0.2 | 12 | 40 | | 30 |
| Comparative Example 2 | 15 | 0.1 | 0.4 | 15 | 15 | 40 | 6 |
| Comparative Example 3 | 15 | 0.30 | 0.1 | 10 | 40 | 12 | 6 |
| Comparative Example 4 | 5 | 0.12 | 0.04 | 20 | 20 | 8 | 2 |

**Table 2**

| | Head wear (µm/10 min) | Head cleaning force (dB) | Head scratch | Head deposit | Head corrosion |
|---|---|---|---|---|---|
| Example 1 | 0.01 | 0 | No | No | No |
| Example 2 | 0.01 | -0.1 | No | No | No |
| Example 3 | 0.05 | -0.2 | No | No | No |
| Example 4 | 0.03 | -0.3 | No | No | No |
| Comparative Example 1 | 0.20 | -1.2 | Yes | Yes | Yes |
| Comparative Example 2 | 0.80 | -2.0 | Yes | Yes | Yes |
| Comparative Example 3 | 0.08 | -0-5 | No | Yes | Yes |
| Comparative Example 4 | 1.20 | -1.5 | Yes | Yes | No |

According to the foregoing tables, it is noted that the Examples in which the C/Fe peak ratio, Cl/Fe peak ratio and N/Fe peak ratio of the cleaning layer meet the requirements of the invention are low in head wear, are high in head cleaning force, are free from head scratch, and are free from head deposit and head corrosion. On the other hand, the Comparative Examples are inferior in any one of the foregoing characteristics.

## Claims

1. A cleaning medium comprising:
a non-magnetic back layer;
a non-magnetic support; and
a cleaning layer containing a ferromagnetic powder and a binder, in this order,
**characterized in that** the surface of the cleaning layer has a C/Fe peak ratio of from 10 to 20, a Cl/Fe peak ratio of not more than 0.2, and an N/Fe peak ratio of from 0.03 to 0.1 according to an Auger electron spectroscopy.

2. The cleaning medium according to claim 1, further comprising a lower coating layer containing a non-magnetic inorganic powder and a binder provided between the non-magnetic support and the cleaning layer.

3. The cleaning medium according to claim 1 , wherein an amount of a residual solvent in the cleaning layer is not more than 8 mg/m².

4. The cleaning medium according to claim 1, wherein the C/Fe peak ratio is from 10 to 18.

5. The cleaning medium according to claim 1, wherein the Cl/Fe peak ratio is not more than 0.18.

6. The cleaning medium according to claim 1, wherein the N/Fe peak ratio is from 0.03 to 0.08.

7. The cleaning medium according to claim 1 , wherein the cleaning layer further contains carbon black.

8. The cleaning medium according to claim 1, wherein the cleaning layer further contains an inorganic powder as an abrasive.

9. The cleaning medium according to claim 1 , wherein the non-magnetic back layer contains carbon black.

10. The cleaning medium according to claim 2, wherein the non-magnetic inorganic powder is α-iron oxide or titanium dioxide.

## Patentansprüche

1. Reinigungsmedium, umfassend:
eine nicht-magnetische Rückschicht;
einen nicht-magnetischen Träger; und
eine Reinigungsschicht, die ein ferromagnetisches Pulver und ein Bindemittel, in dieser Reihenfolge, enthält,
**dadurch gekennzeichnet, dass** die Oberfläche der Reinigungsschicht ein C/Fe-Peak-Verhältnis von 10 bis 20, ein Cl/Fe-Peak-Verhältnis von nicht mehr als 0,2, und ein N/Fe-Peak-Verhältnis von 0,03 bis 0,1 gemäß Auger-Elektronenspektroskopie besitzt.

2. Reinigungsmedium nach Anspruch 1, ferner umfassend eine untere Beschichtungsschicht, die ein nicht-magnetisches anorganisches Pulver und ein Bindemittel enthält, die zwischen dem nicht-magnetischen Träger und der Reinigungsschicht bereitgestellt ist.

3. Reinigungsmedium nach Anspruch 1, worin eine Menge eines Restlösungsmittels in der Reinigungsschicht nicht mehr als 8 mg/m² beträgt.

4. Reinigungsmedium nach Anspruch 1, worin das C/Fe-Peak-Verhältnis 10 bis 18 beträgt.

5. Reinigungsmedium nach Anspruch 1, worin das C1/Fe-Peak-Verhältnis nicht mehr als 0,18 beträgt.

6. Reinigungsmedium nach Anspruch 1, worin das N/Fe-Peak-Verhältnis 0,03 bis 0,08 beträgt.

7. Reinigungsmedium nach Anspruch 1, worin die Reinigungsschicht ferner Ruß enthält.

8. Reinigungsmedium nach Anspruch 1, worin die Reinigungsschicht ferner ein anorganisches Pulver als ein Schleifmittel enthält.

9. Reinigungsmedium nach Anspruch 1, worin die nicht-magnetische Rückschicht Ruß enthält.

10. Reinigungsmedium nach Anspruch 2, worin das nicht-magnetische anorganische Pulver α-Eisenoxid oder Titandioxid ist.

## Revendications

1. Agent de nettoyage comprenant :
une couche dorsale non magnétique ;
un support non magnétique ; et
une couche de nettoyage contenant une poudre ferromagnétique et un liant, dans cet ordre,
**caractérisé en ce que** la surface de la couche de nettoyage a un rapport de pics C/Fe de 10 à 20, un rapport de pics CI/Fe d'au plus 0,2 et un rapport de pics N/Fe de 0,03 à 0,1 selon une spectroscopie électronique selon Auger.

2. Agent de nettoyage selon la revendication 1 comprenant en outre une couche de revêtement inférieure contenant une poudre inorganique non magnétique et un liant disposée entre le support non magnétique et la couche de nettoyage.

3. Agent de nettoyage selon la revendication 1 où la quantité de solvant résiduel dans la couche de nettoyage n'est pas supérieure à 8 mg/m²_{.}

4. Agent de nettoyage selon la revendication 1 où le rapport de pics C/Fe est de 10 à 18.

5. Agent de nettoyage selon la revendication 1 où le rapport de pics CI/Fe n'est pas supérieur à 0,18.

6. Agent de nettoyage selon la revendication 1 où le rapport de pics N/Fe est de 0,03 à 0,08.

7. Agent de nettoyage selon la revendication 1 où la couche de nettoyage contient en outre du noir de carbone.

8. Agent de nettoyage selon la revendication 1 où la couche de nettoyage contient en outre une poudre inorganique comme abrasif.

9. Agent de nettoyage selon la revendication 1 où la couche dorsale non magnétique contient du noir de carbone.

10. Agent de nettoyage selon la revendication 2 où la poudre inorganique non magnétique est de l'oxyde de fer α ou du dioxyde de titane.
